**Europäisches Patentamt**

**European Patent Office**

**Office européen des brevets**

(11) Veröffentlichungsnummer: **0 185 110**
**A1**

(12) **EUROPÄISCHE PATENTANMELDUNG**

(21) Anmeldenummer: 84115825.6

(22) Anmeldetag: 19.12.84

(51) Int. Cl.⁴: **B 29 C 49/32**

(43) Veröffentlichungstag der Anmeldung:
25.06.86 Patentblatt 86/26

(84) Benannte Vertragsstaaten:
DE FR GB IT

(71) Anmelder: BEKUM Maschinenfabriken GmbH
Lankwitzerstrasse 14/15
D-1000 Berlin 42(DE)

(72) Erfinder: Mehnert, Gottfried
Messelstrasse 25
D-1000 Berlin(DE)

(74) Vertreter: Huss, Carl-Hans, Dipl.-Ing. et al,
Patentanwalt Griesstrasse 3 a Postfach 14 54
D-8100 Garmisch-Partenkirchen(DE)

(54) **Blasanlage für die Herstellung von Hohlkörpern aus Kunststoff.**

(57) Um bei Blasanlagen für die Herstellung von Hohlkörpern aus Kunststoff mit einem von mindestens einem Extruder gespeisten, einen Kunststoffhohlstrang senkrecht nach unten auspressenden Blaskopf hohe Auspreßgeschwindigkeiten ausnutzen, dabei bei geringem Platzbedarf möglichst geringe Massen auf möglichst kurzen Wegen ohne gegenseitige Behinderung bewegen und gegebenenfalls auch mehrere Extruder platzsparend unterbringen zu können, sind je eine Blasform (6 bis 9) tragende, vertikal hebund senkbare, mit der geöffneten Form auf Teilkreisbahnen unter die Düse des Blaskopfes (5) horizontal einschwenkbare Schließgestelle (10 bis 13) vorgesehen, deren jedem in der zur Schlauchaufnahmestellung entgegengesetzten, zurückgeschwenkten Stellung eine stationäre Blasstation mit nachfolgenden Ver- und/oder Bearbeitungsstationen (I-IV) zugeordnet ist, und die so gesteuert sind, daß die Bewegungsbahnen jeweils zweier im Maschinenzyklus aufeinanderfolgender Schließgestelle einen durchgehenden Kurvenzug gleicher Laufrichtung bilden.

./...

FIG.1

B 554 EU-Hs
Garmisch-Partenkirchen,
18. Dezember 1984
Hs:A

BEKUM Maschinenfabriken GmbH
Lankwitzer Straße 14/15
D-1000 Berlin 42

Blasanlage für die Herstellung von Hohlkörpern aus
Kunststoff

In der Technik der Herstellung von Hohlkörpern aus Kunststoff nach der Blasmethode, bei der Abschnitte eines fortlaufend extrudierten Schlauches von einer zwischen einer Schlauchaufnahmestation und einer Blasstation zyklisch bewegten geteilten Blasform aufgenommen und nach deren Schließen im Formnest aufgeblasen werden, wird durch die Vervollkommnung der praktisch ohne Massenbewegung arbeitenden Extrudertechnik die Schlauchauspreßgeschwindigkeit immer größer, während damit die mit der Bewegung erheblicher Massen verbundene Technik der Bewegung der Blasformen nicht Schritt halten kann.

Erhebliche bewegte Massen rühren daher, daß die Formbewegung die Bewegung der Formteile auseinander zum Öffnen und aufeinander zu zum Schließen der Form sowie die Bewegung der gesamten Form einschließlich ihres Schließmechanismus unter den Extruder zur Aufnahme schlauchförmiger Vorformlinge und aus dieser Aufnahmeposition in die Blasstation und zurück einschließt. Hierzu muß die geöffnete Blasform, nachdem aus ihr ein vorher in ihr ausgeblasener Hohlkörper entnommen wurde, im geöffneten Zustand unter den Blaskopf des Extruders fahren, den inzwischen in richtiger Länge ausgespritzten Schlauchabschnitt als Vorformling durch Schließen, d.h. Zusammenfahren der Formteile aufnehmen, im geschlossenen Zustand in die Blasstation fahren, in der z.B. ein Blasdorn in den an einer Seite offenen Vorformling einfährt und in dieser Stellung verharren, bis der Hohlkörper ausgeblasen und nach dem Öffnen der Form entnommen ist, um dann mit einem neuen Zyklus zu beginnen. Das dauert seine Zeit und erfordert die Bewegung größerer Massen, nämlich einmal der Formteile (Öffnen und Schließen) und der gesamten Form einschließlich des gesamten Schließsystems (Schlauchaufnahmestation - Blasstation).

Als Lösung dieses Problems bietet sich an, mehr als eine Blasform einem Extruder zuzuordnen, wobei in der Regel zwei Formen auf einer geraden Bahn aus der Blasstation in die Schlauchaufnahmestation abwechselnd von zwei Seiten aus gefahren werden (Zwei-Stationen-Maschine), während bei mehr als zwei Blasformen diese meist auf einer Kreisbahn bewegt werden (Rundtischmaschinen).

Bei der Herstellung von Hohlkörpern aus Kunststoff im Blasverfahren besteht aber der Gesamtherstellungszyklus nicht nur aus der Aufnahme eines Vorformlings und dem Aufblasen desselben zum fertigen Hohlkörper. Vielmehr sind meist dazwischen und/oder danach weitere Be- und Verarbeitungsoperationen erforderlich. So muß z.B. der ausgeblasene Hohlkörper in der geschlossenen Form abkühlen, bis er die für die Entnahme erforderliche Verfestigung erreicht hat, der aus Hals- und Bodenbutzen bestehende Abfall muß innerhalb oder außerhalb der Blasform entfernt werden, und häufig muß der fertige Hohlkörper auch noch innerhalb oder außerhalb der Form mit einem Etikett versehen oder bedruckt werden. Falls unter Druck stehende Flüssigkeiten eingefüllt werden sollen, ist auch eine Innendruckprüfung zweckmäßig. Außerdem ist bei der die Haltbarkeit und gegebenenfalls Transparenz der hergestellten Hohlkörper wesentlich verbessernden, allgemein "biaxiales Recken" genannten Methode eine Aufteilung des Blasvorgangs in die Herstellung eines Vorkörpers aus dem Vorformling in einer Vorblasform und des Fertigkörpers aus dem Vorkörper in einer zweiten Blasform der Fertigblasform, gegebenenfalls mit einer Zwischentemperierung, erforderlich, so daß auch in diesem Falle nach dem ersten Blasvorgang weitere Ver- und Bearbeitungsstationen notwendig sind, die hier überhaupt nur beispielsweise ohne Anspruch auf Vollständigkeit aufgeführt sind.

Der Einsatz von Rundtischmaschinen macht es zwar möglich, daß mehr als zwei, z.B. drei oder vier Blasformen durch nur einen Extruder mit Vorformlingen gespeist werden, jedoch wird dadurch das Problem
der Nachfolgearbeiten nicht zufriedenstellend gelöst. Entweder setzt man auf die Kreisbahn des Rundtisches neben jede Schlauchaufnahmestation außer
einer Blasstation auch beispielsweise Kühlstation,
Butzentrennstation, Prüfstation, Etikettier- und
Entnahmestation, wodurch der Tischdurchmesser und
das Zeitintervall zwischen zwei Schlauchaufnahmevorgängen sehr groß wird, oder man arbeitet mit
kleineren Intervallen und kann dann keine oder nur
wenige Nachfolgestationen unterbringen. Die Platzfrage spielt aber natürlich eine erhebliche Rolle
und dies insbesondere dann, wenn mehr als zwei Formen auf mehr als einen gemeinsam einen Blaskopf
speisenden Extruder arbeiten sollen. Dies ist bei
dem sog. "Co-Extrusionsverfahren" der Fall. Bei
diesem werden aus mehreren Schichten aus unterschiedlichem Material bestehende Schläuche verarbeitet, die so hergestellt werden, daß in einem
Blaskopf mehrere coaxial zueinander liegende Schläuche erzeugt und miteinander verbunden werden, und
hierzu können, weil für jede Schicht ein Extruder
benötigt wird, unter Umständen fünf und mehr Extruder erforderlich sein. Da die Blasformen in der
Regel am Rande des sie tragenden Rundtisches angebracht sein müssen, muß natürlich auch der Blaskopf des Extruders auf eine Stelle dieses Randes
ausgerichtet sein. Müssen also bei einem Co-Extrusionsblasen mehr als zwei oder drei Extruder untergebracht werden, so müssen diese sternförmig angeordnet werden, und das bedeutet, daß für die Berechnung des Gesamtplatzbedarfes die horizontal verhältnismäßig großen Platz benötigenden Extruder zum Gesamtdurchmesser des Rundtisches hinzugerechnet werden müssen.

Das bei einen Hohlstrang sehr schnell auspressenden Extrudern auftretende Problem ist im Zusammenhang mit dem in einer Vorblasform den Vorformling zum Vorkörper ausblasenden und diesen in weiteren Fertigblasformen zum Fertigkörper ausblasenden biaxialen Recken bereits in der DE-OS 22 56 684 angesprochen. Nach dieser wird jeweils eine Vorblasform auf einer geraden Bahn zwischen dem Blaskopf eines Extruders und einer Vorblasstation hin- und hergefahren, zu welcher Vorblasstation mindestens zwei Fertigblasformen gehören. Dies kann entweder in der Weise geschehen, daß die beiden Fertigblasformen auf Teilkreisbahnen zwischen der Vorblasstation und der Fertigblasstation nacheinander bewegt werden oder dadurch, daß die Fertigblasformen stationär angeordnet sind und der jeweils ausgeblasene Vorkörper, an seinem Blasdorn hängend, auf jenen Teilkreisbahnen aus der Vorblasstation zwischen die geöffneten Fertigblasformen gefahren wird. Die Krümmungsmittelpunkte der Kreisbahnen für die Verschwenkung der Fertigform oder Blasdorne liegen dabei einander abgewandt, d.h. die Krümmungsbäuche einander zugewandt oder zueinander konvex. Abgesehen davon, daß bei dieser bekannten Methode mit unterschiedlichen Bahnen, nämlich einer geraden Bahn für eine Vorblasform und gekrümmten Bahnen für mehrere Fertigblasformen und dabei zusätzlich verschiedenen Geschwindigkeiten gearbeitet werden muß, tritt leicht eine gegenseitige Behinderung zweier nebeneinander liegender Fertigblasformen ein bzw., um diese zu verhindern, muß mit großen Bahndurchmessern gearbeitet werden, und dies führt wegen der dann weit auseinander liegenden Krümmungsmittelpunkte, in denen die Schwenkachsen gelagert sind, zu einem großen Platzbedarf und langen Schwenkarmen.

Demnach lag der Erfindung die Aufgabe zugrunde, eine mit mehr als zwei Blasformen auf einen einen Schlauch auspressenden Blaskopf arbeitende Blasanlage zu schaffen, die bei geringem Platzbedarf möglichst geringe Massen auf möglichst kurzen Wegen ohne gegenseitige Behinderung bewegt und gegebenenfalls auch den platzsparenden Einsatz mehrerer Extruder erlaubt.

Diese Aufgabe löst die Erfindung mit den in den Ansprüchen genannten Merkmalen. Sie ist an einem keinen Anspruch auf Vollständigkeit erhebenden Ausführungsbeispiel schematisch dargestellt und anhand dieses beschrieben. Es stellen dar:

Fig. 1    eine Aufsicht auf eine Anlage nach der Erfindung, schematisch und in wesentlich verkleinertem Maßstab,

Fig. 2    eine Seitenansicht der Anlage nach Fig. 1 in einem dieser gegenüber vergrößerten Maßstab,

Fig. 3    ein Zyklusdiagramm.

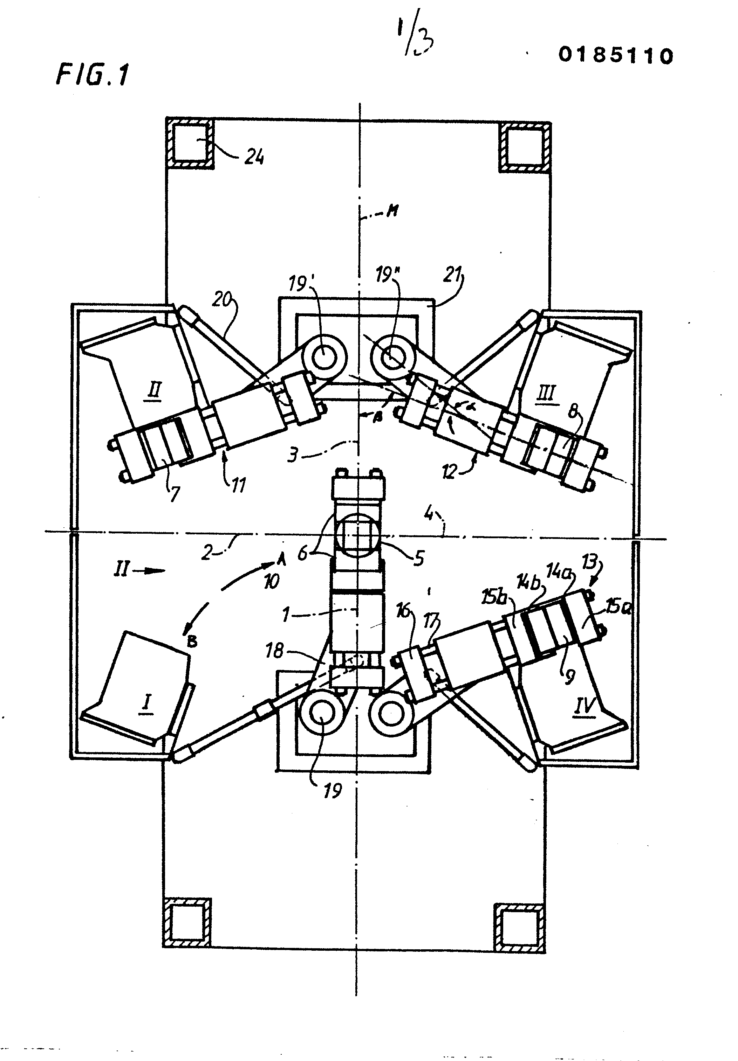

Bei dem dargestellten Beispiel speisen vier in Fig. 1 nur mit ihren sich kreuzenden Teilmittelachsen dargestellte Extruder 1,2,3 und 4 einen Blaskopf 5, der senkrecht nach unten kontinuierlich einen Vorformlinge bildenden Schlauch auspreßt. Diesem Blaskopf 5 sind vier Blasformen 6,7,8 und 9 mit ihren schwenkbaren Schließgestellen 10,11,12 und 13 sowie stationären Blas- und nachfolgenden Verarbeitungs- und/oder Bearbeitungsstationen I-IV zugeordnet. Jedes Schließgestell besteht in üblicher und in der Blastechnik bewährter Weise aus einer Blasform, deren Formteile je auf einer Spannplatte 14a,14b montiert sind, die wiederum an Schließplatten 15a,15b befestigt sind. Die Schließplatte 15a und ein Querhaupt 16 sind durch Holme 17 verbunden, auf denen die Schließplatte 15b mit der zugehörigen Spannplatte und Formhälfte gleitend verschiebbar ist. Diese Einheit wird durch einen geeigneten, zwischen der Schließplatte 15b und dem Querhaupt 16 angeordneten Antrieb, z.B. einen Spindel- oder Kniehebelantrieb, für das Schließen der Form in Richtung auf die Schließplatte 15a oder zum Öffnen weg von ihr verschoben.

An jeder als "Schließgestell" bezeichneten Gesamteinheit "Form-Spannplatten-Schließplatten-Führungsholme-Antrieb" ist ein schräg nach außen seitlich abstehender kurzer Schwenkarm 18 befestigt, dessen Mittelachse mit der des Schließgestells einen spitzen Winkel $\alpha$ einschließt und der um eine senkrechte Achse 19 in Pfeilrichtung A-B auf einer Teilkreisbahn schwenkbar ist. Am Schließgestell oder seinem Schwenkarm greift auf dessen Seite schräg ein hydraulischer oder pneumatischer oder mechanischer Schwenkmotor 20 an, der das Schließgestell um seine senkrechte Achse 19 in Pfeilrichtung A in die Schlauchaufnahmestation unterhalb des Blaskopfes 5 des Extruders oder der Extruder schwenkt oder in Pfeilrichtung B in die der Blasstellung entsprechende Ausgangslage zurückholt. Diese Schwenkmotoren 20 können sehr nahe dem schwenkachsenseitigen Ende der Schließgestelle angreifen, wodurch kleine Baueinheiten im Bereich der Be- und Verarbeitungsstationen und kürzere Bewegungszeiten geschaffen werden. Der Winkel ß, den ein von zwei zusammengehörenden Schließgestellen mit der gemeinsamen Mittelachse M durch den Blaskopf in der Blasstellung einschließt, liegt unter 90°. Dadurch werden verhältnismäßig kurze Wege geschaffen, die auch, weil die Schwenkachsen 19 jeweils zweier Schließgestelle nahe beieinander und nahe ihrer Mittelachsen liegen sowie wegen der Lage der Schwenkmotoren, zu einem geringen Platzbedarf der Gesamtanlage beitragen.

Bei dem dargestellten Beispiel sind jeweils zwei Schließgestelle 10,13 - 11,12 nebeneinander und sich paarweise gegenüberliegend in einem beide Schwenkachsen 19',19" aufnehmenden Sockel 21 zusammengefaßt. Die Stellung des Schließgestells 10 wird als Schlauchaufnahmestellung, die der übrigen als Blasstellung bezeichnet, weil in der Stellung des Schließgestells 10 die Form sich unter dem Blaskopf 5 befindet und das ausgespritzte Schlauchstück als Vorformling aufnehmen kann, während in der anderen, entgegengesetzten Stellung z.B. mittels eines heb- und senkbaren Blasdornes der in die geschlossene
Form eingespannte Vorformling zum Hohlkörper ausgeblasen wird. Die paarweise Zusammenfassung mit dicht
beieinander zugewandt liegenden Schwenkachsen 19
und die gegenüberliegende Anordnung von je zwei
paarweise zusammengefaßten Schließgestellen 10,13 -
11,12 wirkt platzsparend, erleichtert den Zugang zum
Blaskopf und erlaubt die versand- und ladetechnisch
günstige Teilung des Maschinengrundrahmens in gleiche Teile.

Jedem der vorbeschriebenen Schließgestelle
ist stationär eine Blasstation mit Nachfolgestationen
zugeordnet, die in Fig. 1 nur dem Umriß nach schematisch dargestellt und mit I-IV bezeichnet sind.
Sie liegen rechtwinklig zu der Blasstellung des
Schließgestells, damit die geblasenen Gegenstände
aus der geöffneten Form ohne Umlenkung von einer in
die nächste Station transportiert werden können. Daß
nur die Schließgestelle bewegt und die Blasstationen
mit Nachfolgestationen stationär angeordnet sind,
führt zu einem möglichst geringen Energiebedarf und
einer guten Zugänglichkeit der ortsfesten Blas- und
Nachfolgestationen. Wegen der Zusammenfassung jeweils zweier Schließgestelle 10,13 - 11,12 mit ihren
Schwenkachsen 19 auf einem Sockel 21 können auch die
Stationen I bis IV ohne erhöhten Platzbedarf für die
Gesamtanlage so angeordnet werden, daß der Zugang
zum Blaskopf bei stillstehender Maschine nicht versperrt ist.

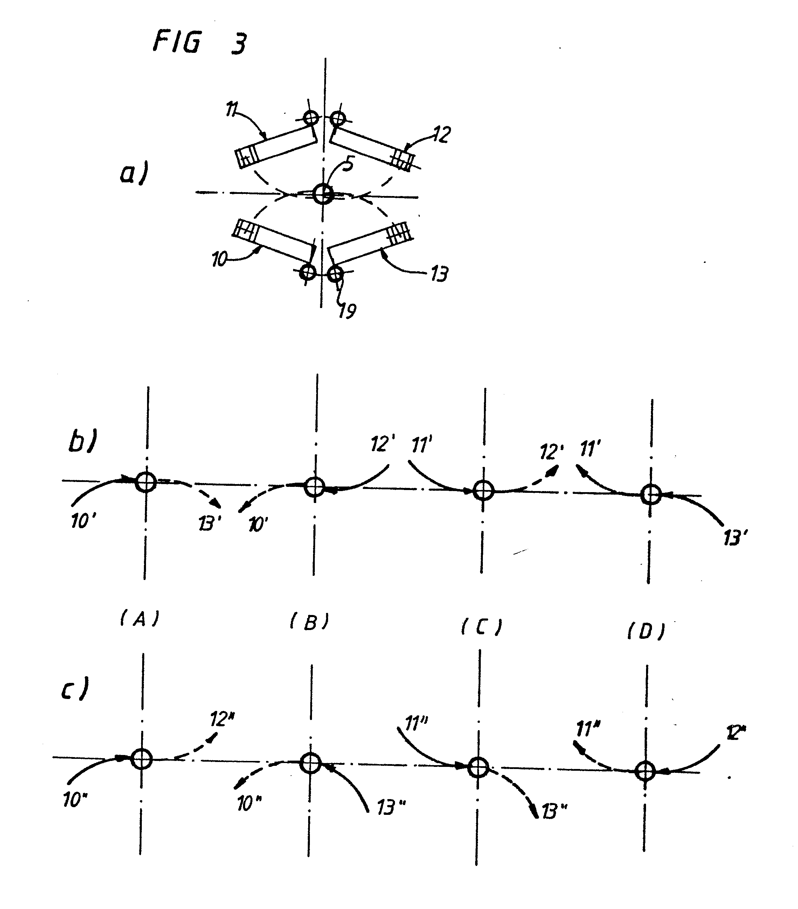

Die Schwenkbewegungen der Schließgestelle
werden so gesteuert, daß sie sich im Gesamtmaschinenzyklus gegenseitig nicht behindern, d.h. immer so, daß die Bahnkurven zweier im Anlagezyklus aufeinanderfolgender Schließgestelle einen durchgehenden Kurvenzug gleicher Laufrichtung bilden, wie
dies schematisch Fig. 3 darstellt. Fig. 3a zeigt
eine Aufsicht auf die Anordnung der auf dem Blaskopf 5 arbeitenden Schließgestelle 10 bis 13 in
einer gegenüber Fig. 1 weiter vereinfachten und
verkleinerten Darstellung, während Fig. 3b und 3c
nur die Bewegungspfeile 10' bis 13' bzw. 10" bis
13" der aufeinanderfolgenden, unter den Blaskopf
schwenkenden Blasformen mit Schließgestellen darstellt. Dabei ist die jeweils einschwenkende Form
durch einen ausgezogenen und die gleichzeitig in
die Blasstellung zurückschwenkende Form, die im
vorangegangenen Takt einen Vorformling holte, durch
einen gestrichelten Pfeil gekennzeichnet. Im Takt (A)
z.B. fährt eine geöffnete Form auf der Bahn 10'
unter den Blaskopf 5, während gleichzeitig - mit
gleicher, voreilender oder verzögerter Geschwindigkeit - eine geschlossene Form auf der Bahn 13'
in die Blasstellung zurückschwenkt. Im folgenden
Takt (B) fährt dann die geschlossene Form mit ihrem
Vorformling auf ihrer Bahn 10' in umgekehrter Richtung in die Blasstellung zurück, während gleichzeitig eine geöffnete Form auf der Bahn 12' zur
Aufnahme eines Vorformlings unter den Blaskopf 5
einschwenkt. Man erkennt, daß die jeweils unter den
Blaskopf fahrende Blasform und die gleichzeitig vom
Blaskopf wegfahrende Form des vorangegangenen Taktes einen durchgehenden Kurvenzug gleicher Richtung
ohne Spitzen und Ecken ergeben, wobei mehrere Möglichkeiten der Taktfolge gegeben sind, wie ein Vergleich der Fig. 3b und 3c zeigt. Dadurch kommt man mit verhältnismäßig geringem Platz aus und kann trotzdem in schneller Reihenfolge ohne Behinderung jeweils ein ausgestoßenes Schlauchstück vom Blaskopf abnehmen und in die Blasstation überführen.

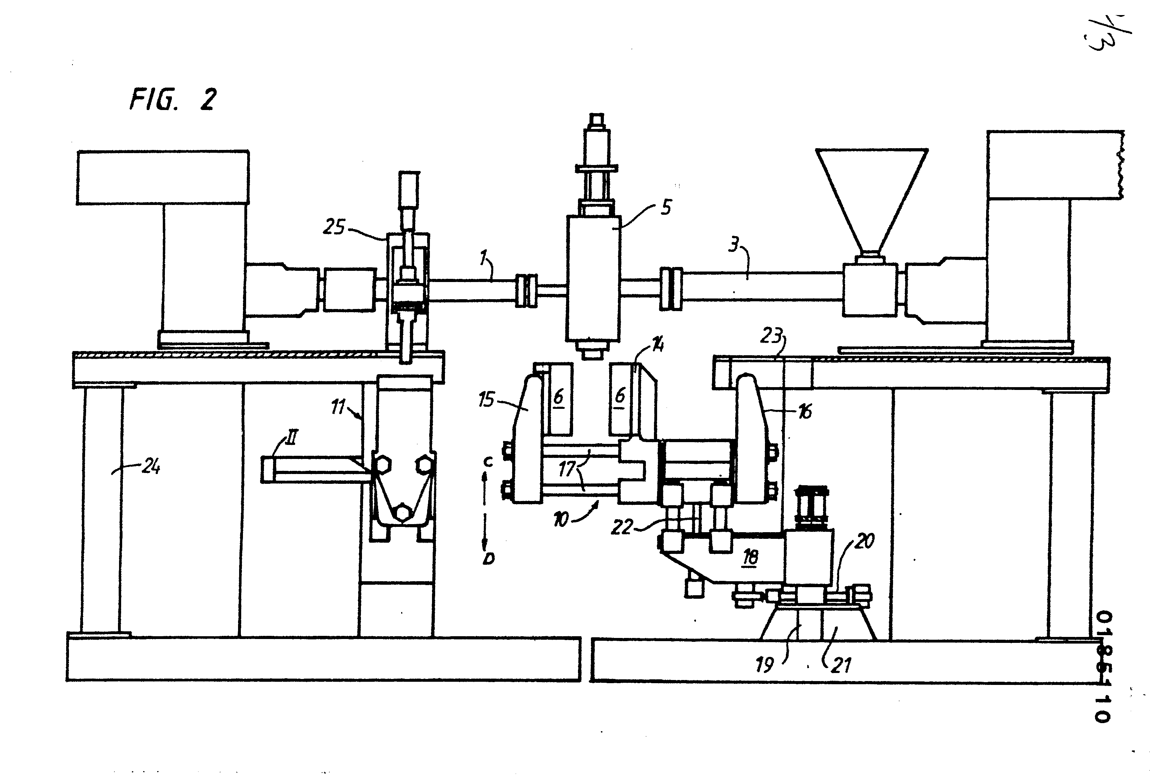

Wie aus Fig. 2 ersichtlich, ist jedes Schließgestell durch Hubmotoren 22 auch in vertikaler Richtung C-D bewegbar, also heb- und senkbar, um die Form unter den Blaskopf für die Aufnahme eines Schlauchstückes anzuheben und danach schnell wieder absenken zu können, zumindest so schnell, daß der mit hoher Geschwindigkeit aus dem Blaskopf austretende Schlauch nach dem Abtrennen des Vorformlings nicht auf den abgetrennten Vorformling und/oder auf die Formoberfläche auflaufen und sich dabei nicht verkleben, verschweißen und nicht verformen kann. Dabei kann das Schwenken eines Schließgestelles in Pfeilrichtung A-B und die Vertikalbewegung C-D so überlagert werden, daß eine Kurvenbahn entsteht.

In Fig. 2 sind auch zwei der Extruder, z.B. die Extruder 1 und 3 erkennbar, die den gemeinsamen Blaskopf 5 speisen und auf einer Bühne oder einem Podest 23 montiert sind, das auf Säulen oder Pfeilern 24 ruht und an dem auch die Blaseinrichtungen 25 der stationären Blasstationen hängen. Da alle Extruder auch bei einer durch ihre Zahl erforderlichen sternförmigen Anordnung auf ein durch den Blaskopf gebildetes Zentrum arbeiten, das auch für alle Schließgestelle Zentrum ist, ist eine platzsparende Bauweise möglich, die Rundtischmaschinen selbst dann nicht aufweisen können, wenn die Extruder in einer zweiten, über dem Rundtisch liegenden Ebene montiert sind.

0185110

## Bezugszeichenaufstellung

1  Extruder

2  Extruder (nur Mittelachse)

3  Extruder

4  Extruder (nur Mittelachse)

5  Blaskopf

6  Blasform

7  Blasform

8  Blasform

9  Blasform

10 Schließgestell

11 Schließgestell

12 Schließgestell

13 Schließgestell

14 Formspannplatten

15 Schließplatten

16 Querhaupt

17 Holme

18 Schwenkarm

19 Schwenkachse

20 Schwenkmotor

21 Sockel

22 Hubmotor

23 Bühne

24 Säulen

25 Blaseinrichtungen

B 554 EU-Hs

Garmisch-Partenkirchen,
18. Dezember 1984
Hs:A

BEKUM Maschinenfabriken GmbH
Lankwitzer Straße 14/15
D-1000 Berlin 42

P a t e n t a n s p r ü c h e

1.     Blasanlage für die Herstellung von Hohlkörpern aus Kunststoff, mit einem von mindestens
einem Extruder gespeisten, einen Kunststoffhohlstrang senkrecht nach unten auspressenden Blaskopf (5) und mit mehr als zwei, den Hohlstrang als
Vorformling abwechselnd aufnehmenden Blasformen
(6 bis 9), die nach dem Schließen in eine Blasstation fahren, in der der in der geschlossenen
Blasform eingespannte Vorformling zum Hohlkörper
aufgeblasen wird, g e k e n n z e i c h n e t
durch je eine Blasform (6 bis 9) tragende, vertikal heb- und senkbare, mit der geöffneten Form auf
Teilkreisbahnen unter die Düse des Blaskopfes (5) horizontal einschwenkbare Schließgestelle (10 bis 13), deren jedem in der zur Schlauchaufnahmestellung entgegengesetzten, zurückgeschwenkten Stellung eine stationäre Blasstation mit nachfolgenden Ver- und/oder Bearbeitungsstationen zugeordnet ist und die so gesteuert sind, daß die Bewegungsbahnen (10' bis 13') jeweils zweier im Maschinenzyklus aufeinanderfolgender Schließgestelle einen durchgehenden Kurvenzug gleicher Laufrichtung bilden.

2. Blasanlage nach dem Anspruch 1, dadurch g e k e n n z e i c h n e t , daß jedes Schließgestell (10 bis 13) in der Blasstellung in einem Winkel ($\alpha$) geringer als 90° zu der durch die Düse des Blaskopfes (5) gehenden Mittelebene steht, in die die geöffnete Blasform für die Schlauchaufnahme einschwenkt.

3. Blasanlage nach dem Anspruch 1, dadurch g e k e n n z e i c h n e t , daß mit jedem Schließgestell (10 bis 13) ein schräg seitlich abstehender Schwenkarm (18) verbunden ist, dessen freies Ende in einer vertikalen Schwenkachse (19) gelagert ist.

4. Blasanlage nach den Ansprüchen 1 und 3, dadurch g e k e n n z e i c h n e t , daß auf der Seite des Schwenkarmes (18) ein Schwenkmotor (20) angelenkt ist.

5. Blasanlage nach den Ansprüchen 1 und 4, dadurch g e k e n n z e i c h n e t , daß der Schwenkmotor (20) nahe dem schwenkarmseitigen Ende des Schließgestells angelenkt ist.

6.     Blasanlage nach den Ansprüchen 1, 3 und 4, dadurch   g e k e n n z e i c h n e t ,  daß für jeweils zwei Schließgestelle (10,13 - 11,12) ihre jeweils außen einander zugewandt liegenden Schwenkachsen (19) in einer Ebene senkrecht zu der ihnen gemeinsamen Mittelachse (M) durch die Düse des Blaskopfes (5) und nahe beieinander liegen.

7.     Blasanlage nach dem Anspruch 6, dadurch   g e k e n n z e i c h n e t ,  daß jeweils zwei Schließgestelle (10,13 - 11,12) auf einem gemeinsamen Sockel (21) zu einer Einheit zusammengefaßt sind.

8.     Blasanlage nach dem Anspruch 1, dadurch   g e k e n n z e i c h n e t ,  daß die Extruder (1 bis 4) auf einer Bühne (23) oberhalb der Schließgestelle montiert sind, an der auch die Blasstatio- nen (25) hängen.

FIG.1

FIG. 2

FIG 3

**0185110**
Nummer der Anmeldung

Europäisches
Patentamt

**EUROPÄISCHER RECHERCHENBERICHT**

EP 84 11 5825

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-A-2 004 894 (CONDUCO)  * Insgesamt * | 1-8 | B 29 C 49/32 |
| A | DE-B-2 401 347 (KORSCH) | | |

RECHERCHIERTE
SACHGEBIETE (Int. Cl.4)

B 29 C

Der vorliegende Recherchenbericht wurde für alle Patentansprüche erstellt.

| Recherchenort DEN HAAG | Abschlußdatum der Recherche 19-08-1985 | Prüfer KUHN E.F.E. |
|---|---|---|